(19) **Europäisches Patentamt**
**European Patent Office**
**Office européen des brevets**

(11) **EP 1 386 693 B1**

(12) **EUROPEAN PATENT SPECIFICATION**

(45) Date of publication and mention
of the grant of the patent:
**06.08.2008 Bulletin 2008/32**

(51) Int Cl.:
***B23Q 16/10*** *(2006.01)*

(21) Application number: **01921384.2**

(86) International application number:
**PCT/ES2001/000150**

(22) Date of filing: **19.04.2001**

(87) International publication number:
**WO 2002/087822 (07.11.2002 Gazette 2002/45)**

(54) **POSITIONING DEVICE WITH DIFFERENTIAL DIVISION**

POSITIONIERVORRICHTUNG MIT DIFFERENTIALTEILUNG

DISPOSITIF DE POSITIONNEMENT DOTE D'UNE DIVISION DIFFERENTIELLE

(84) Designated Contracting States:
**AT BE CH CY DE DK ES FI FR GB GR IE IT LI LU MC NL PT SE TR**

(43) Date of publication of application:
**04.02.2004 Bulletin 2004/06**

(73) Proprietor: **Nicolas Correa, S.A.**
**09007 Burgos (ES)**

(72) Inventor: **NICOLAS-CORREA, José-Ignacio**
**E-09007 BURGOS (ES)**

(74) Representative: **Carpintero Lopez, Francisco**
**Herrero & Asociados, S.L.**
**Alcalá 35**
**28014 Madrid (ES)**

(56) References cited:
**IT-B- 1 244 193        US-A- 4 015 487**

• **PATENT ABSTRACTS OF JAPAN vol. 6, no. 161 (M-151) 24 August 1982 & JP 57 075 758 A (TOSHIBA MACH CO LTD) 12 May 1982**

**Description**

**OBJECT OF THE INVENTION**

The object of the present invention consists of a headstock for a machine tool that has a positioning device with differential division of preferred application in machine tools.

**BACKGROUND OF THE INVENTION**

It is known in the state of the art that when two bodies are to be mutually positioned by means of the rotation of one with respect to the other, there are basically two systems available both having as a common point the use of electric motors associated with systems for detecting their position like for example through an encoder. These positioning systems of the piece, in its rotation have as limitation the operating precision, which is a negative factor when discussing machine tools in which jobs of machining high precision pieces with tight tolerances are carried out.

If to these problems of lack of precision in the positioning of pieces are added the inherent limitations encountered in kinematic trains in which such devices are installed, due to the errors of machining, play and wear characteristic of gears, pulleys, belts, as well as any other element intervening in the devices driving such mechanisms, a serious problem of lack of precision is encountered in the positioning of such machines, or elements intervening in such devices like tools, etc.

These angular positioning systems have to be braked to maintain the selected position, said braking being in some cases carried out by hydraulic, pneumatic or electric controls, or by any other system that is capable of maintaining the position fixed without there being the least slippage leading to loss of position. The elements to achieve this braking and the tremendous forces required to perform that braking are major drawbacks when implementing these systems. Likewise these systems have a great drawback in the form of handling the control data of the angular positioning which signifies great difficulty in repeating the positioning and thereby the loss of precision when repeating positions in these elements.

A second means of achieving these positional locks in such elements is based on the mechanical locking thereof using to this end gear wheels, wherein said positioning is achieved by means of the mutual displacement of gear wheels, such as occurs by way of example with the Spanish utility model U-1.019.219. This model refers to a headstock of a milling machine divided into three mutually rotating bodies and linked by respective gear wheels of 72 or 144 teeth whereby with each step in the position thereof angular displacements of the parts of the headstock of 5° or 2.5° are achieved respectively.

These positioning devices likewise have their own limitations which are imposed by the number of teeth of each gear wheel, since if the intention is to obtain smaller angular values, a greater number of teeth are required, which results in having to make those teeth smaller, whereby the mechanical strength of the system is endangered. Another possible solution would be to overdimension the gear wheels for the purpose of making bigger teeth.

In spite of all this, the problem still remains of having a system offering little flexibility when setting the angular displacement in question.

To achieve a greater availability of displacement angles of these pieces, differential displacement devices were devised among which Spanish patent ES-410.463 stands out in which an angular dividing device is found, in an application of which is its application to machine tools. This angular positioning device has a series of gear wheels meshed with each other, bearing in mind that pitch angle is not the same on adjacently coupled angular gear wheels, thus if for example with the first gear wheel the angle displaced with each step of the teeth is 1°, that of the adjacent rings is 1° 1' and that of the third coupled gear wheels will be 1° 1' 1". With this division which, a priori, has resolved all the angular variations with more than acceptable precision, the practical difficulty appears of having to implement adequate teeth to achieve such precise values of, for example 1° 1' 1 ", that is, even when in theory this system permits very precise angular variations, practice shows that those angles are of very difficult implementation and the angular precision cannot be achieved.

Likewise Italian patent IT-1.244.193 is encountered relative to a device for collocation between two rotating bodies with differential division, using for this the so-called Hirth gear wheels, in which one of these gear wheels with frontal teeth is firmly joined to the fixed part of the machine tool, while the second gear wheel with a different number of teeth is firmly joined to the moving part of the machine and therefore to its rotating headstock, there being between both gear wheels an intermediate on with two sets of teeth one on each side engaged with one and the other gear wheel. An external-actuator is provided for antal displacement of the intermediate gear wheel for engagement and disengagement of the gear wheels. The angular displacement of one gear wheel is counteracted with that of the opposing one which is larger or smaller, differential displacements being achieved by means of the movement of one gear wheel less that of the other. This system shows how a suitable coupling is achieved by a tooth number in each gear wheel of N1 and N2, where the number of teeth N2 is equal to the number of teeth N1 plus 1.

In theory the solution seems suitable to achieve a very precise angular variation, but in practice the angular divisions are not at all exact. For example, if assuming a number of teeth in one of the gear wheels of 360 teeth, this gives an angular displacement for each step of the gear wheel of exactly 1°. However, as the second gear wheel will have 361, an angular displacement of 0.997229917° is obtained. If a rounded value of 0.99° is considered, a differential displacement between one and the other gear wheel is obtained of 1 hundredth of a degree. This, however, is not completely true since part of the decimal has been ignored.

This error, which can appear minimal, means this system has deficient precision which can lead to it being inadequate for determined applications, since the value obtained in this displacement is not an exact decimal value. However, this problem is overcone in US4015487, in which a discrete angular tooth difference of exactly 0.1° is achieved with a tooth ratio of 144 to 150.

## DESCRIPTION OF THE INVENTION

The object of the present invention consists in resolving the defects observed in the state of the art by means of a headstock for a machine tool that has a positioning device which allows a differential division between two mutually rotating bodies, making this displacement have great precision and repeatability in the action and which allows for a compact design.

The present invention relates to a headstock for a machine tool that has a positioning device with differential division, of those constituted by a fixed piece (1) which has a gear wheel with toothed front with a number of teeth N1, a second piece (3) bearing a second gear wheel with toothed front with a number of teeth N2 and a third intermediate piece (2) formed by two oppositely placed toothed fronts which has on one of its faces a number of teeth N1 and on the opposing one a number of teeth N2 coincident and in relation with the teeth of the gear wheels of pieces (1) and (3), where the value of the minimum angle attained in the positioning, which is given by the difference between the inter-tooth angle of the first gear wheel and the inter-tooth angle of the second wheel, is an exact decimal number.

The object of the invention is reached by a device according to claim 1.

An exact decimal number is understood to be that decimal number which presents at least two consecutive zeros after a decimal figure.

It is a primordial purpose of the positioning device that the minimum angle of differential displacement be 0.1°, for which the number of teeth N1 and N2 is respectively 144 and 150

It is also a primordial purpose of the positioning device that the minimum angle of differential displacement be 0.05°, for which the number of teeth N1 and N2 is respectively 119 and 121.

It is also a primordial purpose of the positioning device that the minimum angle of differential displacement be 0.5°, for which the number of teeth N1 and N2 is respectively 144 and 120.

Applications of such a positioning device are, for example, a revolving table of a machine tool, where a part of the working table has to rotate through a very exact determined angle with respect to another fixed part thereof, like for example positioning a piece on the table, secured to the moving part thereof, moving with respect to the tool which will machine said piece. It is therefore understood that the angular precision of rotation that the mentioned machine should offer is not that presently available with the devices known in the state of the art.

A beneficial application of the present invention is found in machine tools such as milling machines where the headstock has to be positioned with respect to the piece to be machined, obtaining with the present invention utmost accuracy which fulfils the most demanding specifications of tolerance imposed in current practice.

## DETAILED DESCRIPTION OF THE INVENTION.

The device in question is based on the use of gear wheels with Hirth teeth, which consist of pieces with frontal teeth opposing each other. When the gear wheels are coupled to each other, excellent mechanical strength is obtained whilst the mutual rotation of these pieces and their subsequent coupling in the successive teeth endows the system with great precision and coupling repeatability.

For the mutual displacement of these pieces electric motors are used with positioning encoder, the aforementioned gear wheels having been previously disengaged from each other, so that once that position is reached the gear wheels are again meshed locking the device and also achieving the necessary precision through engagement of the teeth which impose that precision on the angular displacement.

To reach the solution proposed by the present invention, the applicant has studied in depth the operation of positioning devices. The operation of said positioning devices is explained below in detail, as well as the mathematical calculations that gave rise to the invention.

The angle of mutual displacement of both rings is fixed by the following relationship:

### Inter-tooth angle = 360º/number of teeth

For example, a gear wheel of 360 teeth has an angle of 1° between such teeth and therefore a step of 1 tooth between the gear wheels implies an angular movement of 1°. A gear wheel of 144 teeth offers an inter-tooth angle and therefore a displacement angle in each step of the gear wheel of 2.5°.

This relationship allows rotations to be performed multiples of the rotation of the angle existing between two consecutive teeth. By way of example, some whole values of angular displacement are given according to the number of teeth on the gear wheels.

| N° of TEETH | ANGULAR DISPLACEMENT |
|---|---|
| 720 | 0.5° |
| 600 | 0.6° |
| 450 | 0.8° |
| 360 | 1° |
| 240 | 1.5° |
| 180 | 2° |
| 144 | 2.5° |
| 120 | 3° |

The problem with this embodiment, as has already been stated, resides in the action of trying to make very small angular divisions, which would require gear wheels to be made of great diameter and a large number of teeth. This would not be technically feasible to carry out, since machines would be needed with a great precision when cutting the teeth, which would make the construction of such pieces excessively costly. For example, if we assume it is desired to divide the circumference in tenths of a degree, we have to be able to make multiple rotations of 0.1°. Following the traditional path we should make a Hirth gear with 3600 teeth, which means that if we have a gear wheel with standard 300mm diametral toothing, we would have the following relationships:

$$L = \phi . \pi = 300. \ 3.141 = 942.5 \ mm$$

Where L = Length of the generating circumference of the gear wheel $\phi$ = mean diameter of the gear wheel whereby:

$$\text{Width of the tooth} = L / n° \text{ of teeth} = 942.5 / 3600 = 0.262 \ mm$$

As can be easily appreciated, to make a Hirth gear of 3600 teeth with a width of 0.26 mm each is almost impossible.

To resolve this problem the present positioning device has recourse to differential division as has been implemented in the state of the art, applying for this the technique of Hirth rings to two Hirth gears with a different number of teeth. The device has a fixed gear wheel with a number of teeth N1, a moving gear wheel with a different number of teeth N2 and between the two an intermediate gear wheel likewise moving with teeth on both faces, on the face in coincidence with the fixed ring it will have a number of teeth N1 and on the face opposing a number of teeth N2 which will permit perfect mutual engagement of the three gear wheels.

Thus, the angles of displacement of the rings are:

$$\alpha 1 = 360 / N1$$

$$\alpha 2 = 360 / N2$$

where $\alpha 1$ is the minimum angle of rotation of gear wheel 1,
$\alpha 2$ is the minimum angle of rotation of gear wheel 2,
N 1 is the number of teeth of gear wheel 1, and
N2 is the number of teeth of gear wheel 2.

Hence the minimum differential angle between gear wheel 1 and gear wheel 2 will be therefore the difference of both, that is

$$\alpha \text{ (minimum)} = |\alpha 1 - \alpha 2|$$

where if the angles are replaced by the number of teeth of each gear wheel, we have the following relationship:

$$\alpha \text{ (minimum)} = |(360 / N1) - (360 / N2)| = |360. ((1/N1)-(1/N2))|$$

The use of exact decimal numbers offers the advantage of being able to be handled by the numerical control of the machine in a much simpler way. It also allows being able to work in an incremental manner when carrying out the rotations since by giving a complete turn to the circumference the positions are repeated again.
The values of N1 and N2 which in accordance with the present positioning device make it possible that the minimum angle of differential displacement has an exact value of decimal number are 144 and 150, or 119 and 121, or 144 and 120.
Thus, a minimum angle of differential displacement with value 0.1°, is obtained working with rings of 144 and 150 teeth respectively, such as is indicated by the following equation:

$$(360 / 144) - (360 / 150) = 2.5 - 2.4 = 0.1°$$

With these gear wheels and for a gear wheel diameter of 300 mm, the following values are obtained respectively:

$$L = \phi.\pi = 300. 3. 141 = 942.5 \text{ mm}$$

Where L = Length, of the generating circumference of the gear wheel gear $\phi$ = mean diameter of the gear wheel gear
whereby:
Width of gear wheel 1 tooth = L / n° of teeth = 942.5 / 144 = 6.54 mm
Width of gear wheel 2 tooth = L / n° of teeth = 942.5 / 150 = 6.28 mm
that is, we have widths of teeth of the order of 6 mm, a magnitude which is quite normal for this type of gear wheel.
The operation of these gear wheels has to be carried out in such a way that the first of the gear wheels is unlocked displacing the selected angle to lock the assembly thereafter, subsequently unlocking the second of the rings rotating in the opposite direction, subtracting the previously selected angle.
Thus starting with rings of 144 and 150 teeth which have respective angular displacements of 2.5° and 2.4° respectively, with a differential minimum angle of displacement of 0.1° and desiring to rotate through an angle of 86.4° in the clockwise direction, the procedure followed for displacement of the rings would be the following:

1. - The division is carried out of the 86.4° by the 2.5° of displacement of each tooth of gear wheel 1, the resulting value being 86.4° / 2.5 = 34.56 teeth

2. - The whole number value of the division is kept, that is with 34 teeth which should be rotated in gear wheel 1 with 144 teeth, which would give a displacement that we would already have obtained of 34 x 2.5° = 85°

3. - Still remaining to be rotated would be: 86.4° - 85° = 1.4°

4. - Said 1.4° of displacement would be obtained by means of differential movement of the Hirth gears, since bearing in mind that if the difference in pitch with the displacement of a single tooth in a gear wheel and the direction opposite to the other one there is a 0.1° displacement, to obtain 1.4° it is necessary to rotate 14 teeth in the first gear wheel and other 14 teeth in the second gear wheel in the opposite direction.

5. - These displacements would give the following results:

Gear wheel 1 = 34 teeth + 14 teeth = 48 teeth in the clockwise direction
Gear wheel 2 = 14 teeth in the anticlockwise direction

6. - The confirmation would be the following:

Gear wheel 1 = 48 teeth x 2.5° = 120° in the clockwise direction
Gear wheel 2 = 14 teeth x 2.4° = 33.6° in the anticlockwise direction
Displaced final angle 120° - 33.6° = 86.4°

This operating mode offers an infinite combination of results which can be obtained in practice.

As previously mentioned, the possibilities also include a positioning device which has 119 teeth in gear wheel 1 and 121 teeth in gear wheel 2, as well as 144 teeth in gear wheel 1 and 120 teeth in gear wheel 2. In this case there is a minimum angle of differential displacement between the two gear wheels of:

$$\alpha \text{ (minimum)} = (360/119) - (360/121) = 0.05000347º$$

$$\alpha \text{ (minimum)} = (360/120) - (360/144) = 0.5º$$

a figure which in the first case can be rounded with great precision to 5 hundredths of a degree of differential displacement between the two gear wheels, obtaining angular variations in values multiples of said 5 hundredths of a degree and in the second case it is an exact decimal number.

According to that described in the present specification, it would be possible for a determined minimum angle of determined differential displacement between the Hirth gear wheels, to calculate the number of teeth of such gear wheels.

## DESCRIPTION OF THE DRAWINGS

To complete the description being made and with the object of assisting in a better understanding of the invention, attached to the present descriptive specification, as an integral part thereof, is a set of drawings, in which the following is shown by way of illustration and not restrictively:

Figure 1 shows a view in perspective of the gear wheels with Hirth teeth with differential division, unlocked.

Figure 2 shows a similar view to that of figure 1 from a side elevation.

Figure 3 shows the assembly of the gear wheels with Hirth teeth with differential division mounted for headstock operation.

Figure 4 shows the embodiment of a headstock of dual rotation with employment of gear wheels with differential Hirth teeth.

## PREFERRED EMBODIMENT OF THE INVENTION

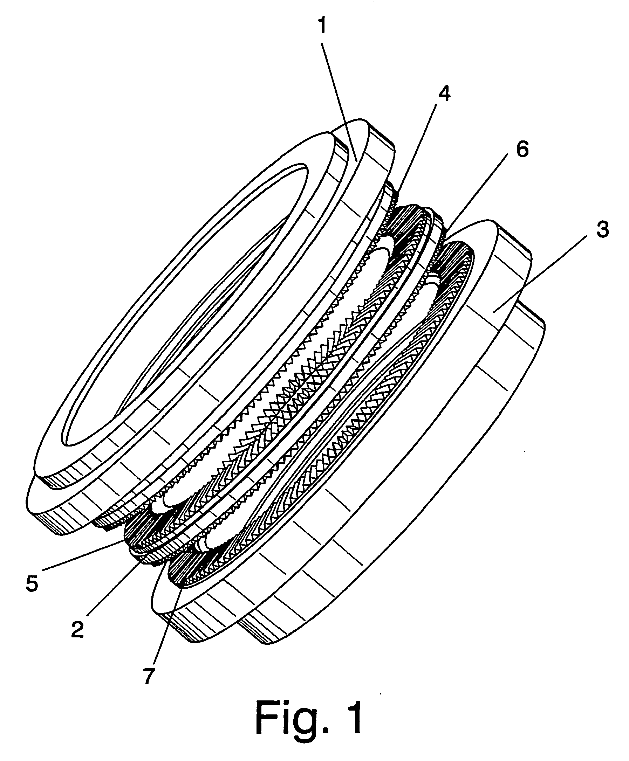

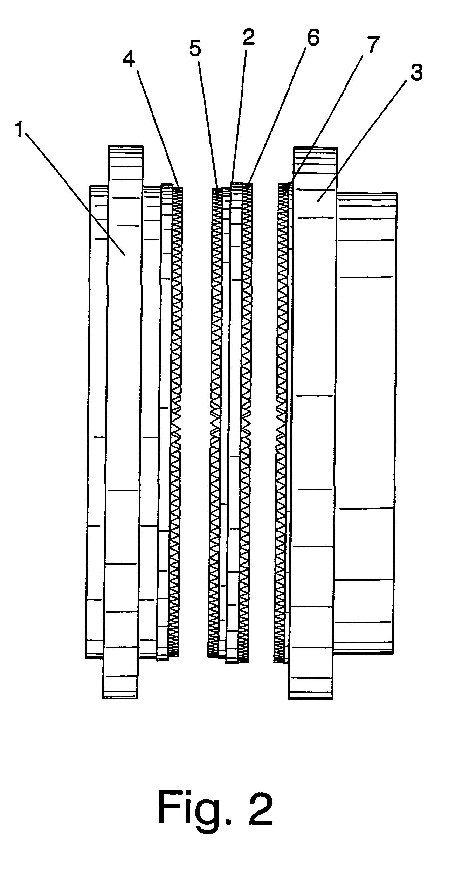

In figures 1 and 2 are shown respectively a view in perspective and another in side elevation of unlocked Hirth gear wheels with differential division. Thus piece (1) can be observed which is firmly joined to the fixed part of the machine and which incorporates toothed gear wheel (4) with a number of teeth N1.

In these figures 1 and 2, piece (3) is observed which is firmly joined to the moving part of the headstock and which incorporates a second gear wheel (7) with a number of teeth N2, it being kept in mind that the number of teeth N1 is different from the number of teeth N2 in order to be able to make the differential movement of the headstock.

Between pieces (1) and (3) is located intermediate piece (2) in ring form, which on one side has toothed gear wheel (5) with an equal number of teeth N1 as toothed gear wheel (4) and on the other side is mounted toothed gear wheel (6) with an equal number of teeth N2 as toothed gear wheel (7) of piece (3).

When the assembly is meshed, pieces (1), (2) and (3) form a single body, the movement of which is transmitted through toothed gear wheels (4)-(5) and (6)-(7).

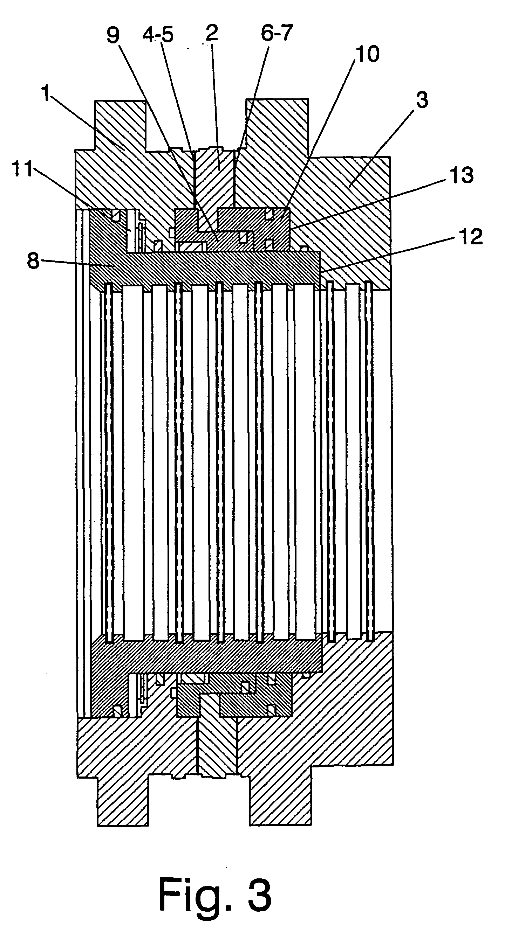

In figure 3 the arrangement is shown of the gear wheels with Hirth teeth with differential division mounted for headstock operation. In this figure pieces (1), (2) and (3) are shown in the merging of which between each two pieces the gearing (4)-(5) and (6)-(7) is arranged.

For the locking and unlocking of the gearing, auxiliary pieces (8), (9) and (10) are arranged, more specifically, auxiliary piece (8) is joined to piece (3), auxiliary piece (9) is joined to piece (1), while auxiliary piece (10) is firmly joined to piece (2).

With this arrangement it is possible to implement three chambers (11), (12) and (13) which permit control of the operation of the device hydraulically, pneumatically, etc. Thus, for example, if pressure is introduced in chamber (11), chambers (12) and (13) remain unpressurised whereby pieces (1) (2) and (3) remain joined and therefore toothed gear wheels (4)-(5) and (6)-(7) remain meshed, this meshing force being proportional to the pressure in chamber (11). If pressure is introduced in chamber (12), chambers (11) and (13) remain unpressurised, mutual decoupling taking place of pieces (1) and (2) but there is no decoupling of pieces (2) and (3) since auxiliary piece (10) is firmly joined to piece (2). The travel permitted in that displacement will be given by the length of chamber (11) over which said displacement is made. This displacement has to be greater than the actual height of the teeth for the purpose of assuring decoupling of the gear wheels.

The process followed in the displacement of this gear wheel, would be to introduce pressure in chamber (13) and removing it from chamber (11), decoupling taking place between toothed gear wheels (4) and (5). Next the assembly formed by pieces (2) and (3) is made to turn through the desired angle, in order to subsequently introduce pressure in chamber (11) whereby the coupling of pieces (1), (2) and (3) is produced.

When it is desired to carry out decoupling of toothed gear wheels (6) and (7), this is done by introducing pressure in chamber (13) and removing pressure from chamber (11), achieving thereby the displacement of pieces (1) and (2) in the measure defined by chamber (11). This displacement is capable of separating gear wheels (6) and (7) from each other making possible the rotation of piece (3) in their differential movement through the angle selected. When the displacement is finished, restore pressure in chamber (11) thereby coupling pieces (1), (2) and (3).

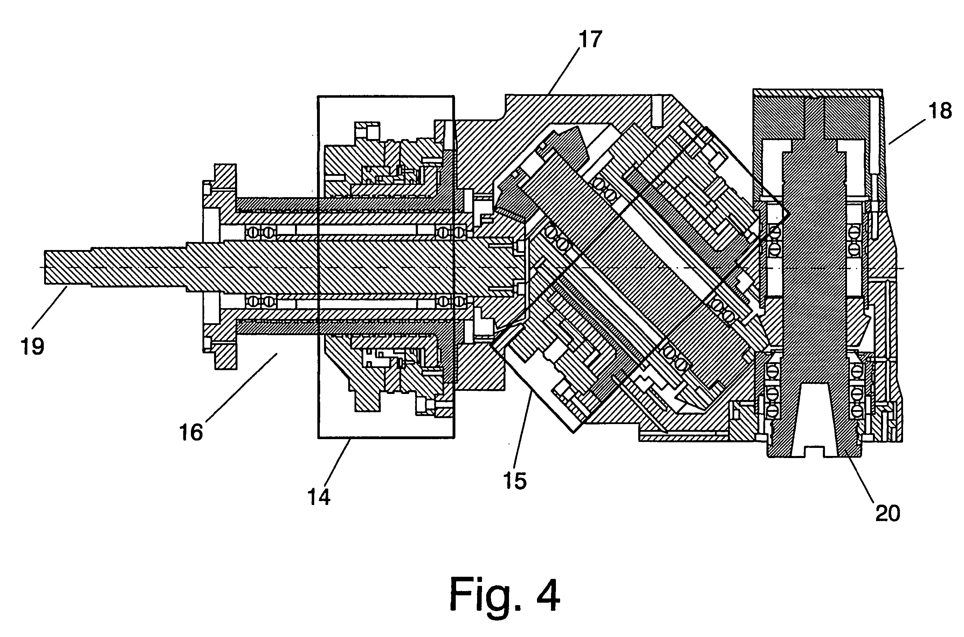

Figure 4 shows the use of Hirth teeth with differential division in a machine tool. In this figure the part of headstock (16) is shown which will be fixed to the machine and how it is coupled to intermediate area (17) of the headstock through the intermediate arrangement (14) of Hirth toothing, and how this is located at the end of headstock (18) where the tool is held, this intermediate body and the end of the headstock being joined by means of similar gear wheels with Hirth teeth for differential division.

The elements for transmission of movement from input shaft (19) to output shaft bearing tool (20) are conventional, through conical pinions as may be observed in the representation of the figure mentioned.

**Claims**

1.  - Headstock for a machine tool that has positioning devices with differential division formed by a fixed piece (1) that has a gear wheel with toothed front with a number of teeth N1, a second piece (3) bearing a second gear wheel with toothed front with a number of teeth N2, and a third intermediate piece (2) formed by two oppositely placed toothed fronts that has, in one of its faces, a number of teeth N1 and on the opposite one a number o teeth N2, coincident and in relation with the teeth of the gear wheels of pieces (1) and (2), **characterised in that** the value of the minimum angle attained in the positioning, which is given by the difference in the angle between teeth of the first gear wheel and the angle between teeth of the second gear wheel, is an exact decimal number, and **in that** the locking and unlocking movements of the toothed fronts are carried out by means of the control of volume and pressure of a fluid that enters and leaves a number of sealed chambers and **in that** said sealed chambers are located internally with respect to the gear wheels.

2.  - Headstock for a machine tool that has positioning devices with differential division according to the claim 1, **characterised in that** the minimum angle of differential displacement is 0.1°, for which the numbers of teeth N1 and N2 are 144 and 150 respectively

3.  - Headstock for a machine tool that has positioning devices with differential division according to the claim 1, **characterised in that** the minimum angle of differential displacement is 0.05°, for which the numbers of teeth N1 and N2 are 119 and 121 respectively.

4.  - Headstock for a machine tool that has positioning devices with differential division according to the claim 1, **characterised in that** the minimum angle of differential displacement is 0.5°, for which the numbers of teeth N1 and N2 are 144 and 120 respectively.

5.  - Headstock for a machine tool that has positioning devices with differential division according to the claims 1 to 4, **characterised in that** the rotation movements of the gear wheels are carried out incrementally, and not absolutely.

6.  - Work centre that includes a headstock for a machine tool according to any of the claims 1 to 5.

7.  - Machine tool that includes a headstock for a machine tool according to any of the claims 1 to 5.

8.  - Milling machine that includes a headstock for a machine tool according to any of the claims 1 to 5.


**Patentansprüche**

1.  Spindelstock für eine Werkzeugmaschine, der Positioniervorrichtungen mit Differenzialteilung hat, bestehend aus einem feststehenden Teil (1), der ein Zahnrad mit gezahnter Vorderseite mit einer Anzahl Zähne N1 hat, einem zweiten Teil (3), der ein zweites Zahnrad mit gezahnter Vorderseite mit einer Anzahl Zähne N2 hat und einem dritten Zwischenteil (2), gebildet aus zwei einander gegenüber angeordneten gezahnten Vorderseiten, die an einer ihrer Stirnseiten eine Anzahl Zähne N1 und an der gegenüberliegenden Stirnseite eine Anzahl Zähne N2 in Übereinstimmung mit und bezogen auf die Zähne der Zahnräder der Teile 1 und 2 haben, **dadurch ge-kennzeichnet,** dass die Größe des kleinsten Winkels, der bei der Positionierung erzielt wird, der durch die Differenz des Winkels zwischen den Zähnen des ersten Zahnrades und des Winkels zwischen den Zähnen des zweiten Zahnrades gegeben ist, eine exakte Dezimalzahl ist, und dass die Sperr- und Entsperrbewegungen des Spindelstocks durch die Steuerung des Volumens und des Druckes eines Fluids durchgeführt werden, das in eine Anzahl von abgedichteten Kammern eintritt und aus diesen austritt, und dass die abgedichteten Kammern innerhalb der Zahnräder liegen.

2.  Spindelstock für eine Werkzeugmaschine mit Positioniervorrichtungen mit Differenzialteilung nach Anspruch 1, **dadurch gekennzeichnet, dass** der kleinste Winkel der Differenzialverschiebung 0,1° ist, wofür die Anzahl der Zähne N1 und N2 144 bzw. 150 ist.

3.  Spindelstock für eine Werkzeugmaschine mit Positioniervorrichtungen mit Differenzialteilung gemäß Anspruch 1, **dadurch gekennzeichnet, dass** der kleinste Winkel der Differenzialverschiebung 0,05° ist, wofür die Anzahl der Zähne N1 und N2 119 bzw. 121 ist.

4.  Spindelstock für eine Werkzeugmaschine mit Positioniervorrichtungen mit Differenzialteilung gemäß Anspruch 1, **dadurch gekennzeichnet, dass** der kleinste Winkel der Differenzialverschiebung 0,5° ist, wofür die Anzahl der Zähne N1 und N2 144 bzw. 120 ist.

5.  Spindelstock für eine Werkzeugmaschine mit Positioniervorrichtungen mit Differenzialteilung gemäß den Ansprüchen 1 bis 4, **dadurch gekennzeichnet, dass** die Rotationsbewegungen der Zahnräder schrittweise und nicht absolut ausgeführt werden.

6.  Bearbeitungszentrum, das einen Spindelstock für eine Werkzeugmaschine gemäß einem der Ansprüche 1 bis 5 hat.

7.  Werkzeugmaschine, die einen Spindelstock für eine Werkzeugmaschine gemäß einem der Ansprüche 1 bis 5 hat.

8.  Fräsmaschine, die einen Spindelstock für eine Werkzeugmaschine gemäß einem der Ansprüche 1 bis 5 hat.


**Revendications**

1.  Poupée fixe pour une machine-outil comprenant des dispositifs de positionnement dotés d'une division différentielle, formée par une pièce fixe (1) qui possède une roue dentée munie d'un avant denté ayant un nombre de dents N1, par une seconde pièce (3) supportant une seconde roue dentée munie d'un avant denté ayant un nombre de dents N2, et par une troisième pièce intermédiaire (2) formée par deux avants dentés placés de façon opposée, et qui possède, sur l'une de ses faces, un nombre de dents N1 et sur la face opposée un nombre de dents N2, qui coïncident et sont en relation avec les dents des roues dentées des pièces (1) et (2),

**caractérisée en ce que**

la valeur de l'angle minimum atteint lors du positionnement, donnée par la différence entre l'angle entre dents de la première roue dentée et l'angle entre dents de la seconde roue dentée, est un nombre décimal exact, et

les mouvements de verrouillage et de déverrouillage des avants dentés sont réalisés au moyen du contrôle du volume et de la pression d'un fluide qui pénètre dans un certain nombre de chambres hermétiques et sort de celles-ci, les chambres hermétiques étant situées à l'intérieur par rapport aux roues dentées.

2. Poupée fixe pour une machine-outil comprenant des dispositifs de positionnement dotés d'une division différentielle selon la revendication 1,

   **caractérisée en ce que**

   l'angle minimum du déplacement différentiel est égal à 0,1 °, valeur pour laquelle les nombres de dents N1 et N2 sont respectivement de 144 et 150.

3. Poupée fixe pour une machine-outil comprenant des dispositifs de positionnement dotés d'une division différentielle selon la revendication 1,

   **caractérisée en ce que**

   l'angle minimum du déplacement différentiel est égal à 0,05°, valeur pour laquelle les nombres de dents N1 et N2 sont respectivement de 119 et 121.

4. Poupée fixe pour une machine-outil comprenant des dispositifs de positionnement dotés d'une division différentielle selon la revendication 1,

   **caractérisée en ce que**

   l'angle minimum du déplacement différentiel est égal à 0,5°, valeur pour laquelle les nombres de dents N1 et N2 sont respectivement de 144 et 120.

5. Poupée fixe pour une machine-outil comprenant des dispositifs de positionnement dotés d'une division différentielle selon les revendications 1 à 4,

   **caractérisée en ce que**

   les mouvements de rotation des roues dentées sont réalisés de manière incrémentielle, et non de manière absolue.

6. Centre de travail comprenant une poupée fixe pour une machine-outil selon l'une des revendications 1 à 5.

7. Machine-outil comprenant une poupée fixe pour une machine-outil selon l'une des revendications 1 à 5.

8. Machine-outil de fraisage comprenant une poupée fixe pour une machine-outil selon l'une des revendications 1 à 5.

Fig. 1

Fig. 2

Fig. 3

Fig. 4

**EP 1 386 693 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- ES 1019219 U
- ES 410463
- IT 1244193
- US 4015487 A